# EUROPEAN PATENT APPLICATION

(11) **EP 0 600 644 A1**
(43) Date of publication of application: **08.06.1994**
(21) Application number: 93309233.0
(22) Date of filing: 18.11.1993
(51) Int. Cl.: H04M 19/02, H04M 3/22

(54) **Ring-trip detection using ring voltage and current**

(30) Priority: 30.11.1992 US 983488
(71) Applicant: AT&T Corp., New York, NY 10013-2412 (US)
(72) Inventor: Gammel, John Christopher, Womelsdorf, Pennsylvania 19567 (US)
(74) Representative: Buckley, Christopher Simon Thirsk

(57) **Abstract**

Apparatus and method for detecting a telephone (4) going off-hook during ringing measures the ringing current when the ringing voltage and current have a negative polarity. When the telephone is off-hook, the magnitude of the current will exceed a predetermined amount when the ringing current is negative. This technique is faster and more reliable than prior art ringing current duty cycle measuring techniques. An exemplary embodiment of the detection apparatus involves a resistor (17) in series with the ringing supply (3) to measure the ringing current, and a transistor (19) gated when the ringing voltage is negative.

## Description

### Background of the Invention

### Field of the Invention

This invention relates to telephone line circuits in general and, more particularly, to ringing signal off-hook detection (ring trip) circuits.

### Description of the Prior Art

In telephone systems, such as in large electronic switching systems or in a small private branch exchange (PBX), it is desirable to quickly detect when a telephone goes off-hook (a subscriber answers the telephone) when the telephone is "ringing". This is desirable because ringing voltage (typically a relatively high voltage of about 100 volts at a low frequency of about 20 Hz) may produce very loud noises in the telephone receiver which could injure the subscriber's ear.

One method of detecting an off-hook condition during ringing is a technique for measuring a change in the symmetry of the ringing current. Here, when the subscriber's telephone is on-hook, the ringing current is nearly symmetrical: the current is positive for approximately one-half of the ringing cycle and the current is negative for approximately one-half of the ringing cycle. When the telephone is off-hook, the ringing current is asymmetric; either the current is positive or negative more than one-half the ringing cycle. However, this technique is not very reliable and is particularly unreliable when attempting to detect an off-hook condition quickly, e.g., in less than 200 ms.

### Summary of the Invention

In a telephone system, a method of detecting when a subscriber terminal goes off-hook while a ringing signal is being applied thereto is characterized by the steps of: measuring the ringing signal current; and generating an output signal when the ringing signal current exceeds a predetermined amount and the ringing signal voltage has a predetermined polarity. The presence of the output signal indicates that the subscriber terminal is off-hook.

Additionally, in a subscriber line interface circuit, an apparatus for detecting when a subscriber terminal goes off-hook when a ringing signal generator is coupled to the terminal is characterized by: means for measuring the ringing signal current; and means, responsive to the means for measuring, for generating an output signal when the ringing signal current is greater than a predetermined amount and the ringing signal voltage has a predetermined polarity. The presence of the output signal indicates that the subscriber terminal is off-hook.

### Brief Description of the Drawing

The foregoing features of this invention, as well as the invention itself, may be more fully understood from the following detailed description of the drawings, in which:

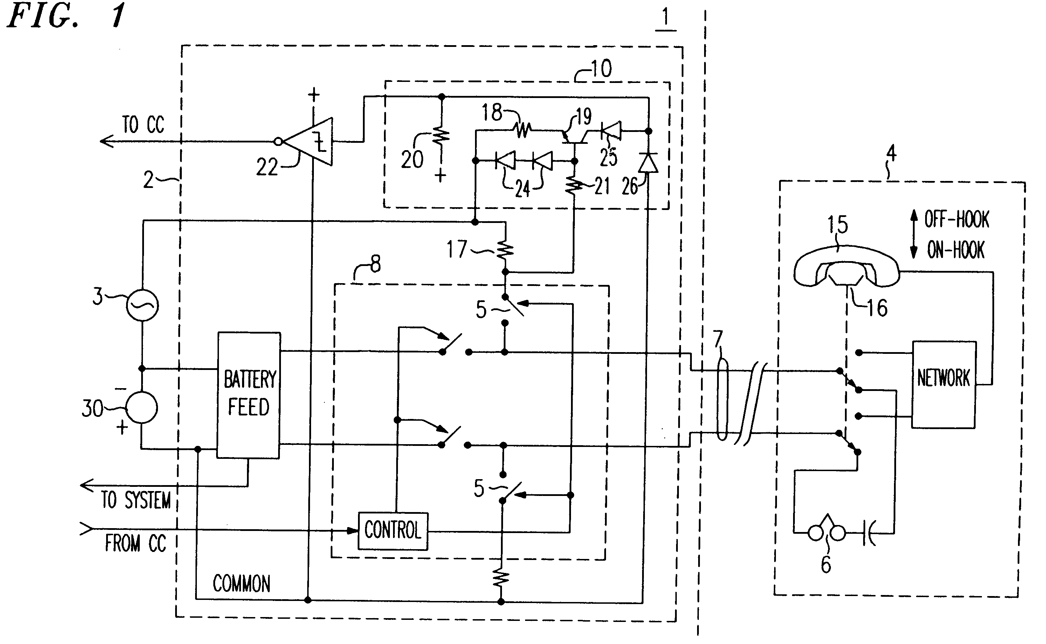

FIG. 1 is an exemplary schematic diagram of the invention according to one embodiment of the invention.

### Detailed Description

The invention can be understood generally by referring to FIG. 1. Here, a portion of an exemplary telephone system l has an exemplary subscriber loop interface circuit 2 and a ringing signal generator 3. The ringing generator is coupled to a subscriber terminal 4 (shown here as a conventional telephone set) when switches 5 are closed, thereby ringing the audible annunciator 6 in the terminal 4. A circuit means 10 measures the ringing signal current when the ringing signal voltage is of a predetermined polarity. A comparator 11 generates an output signal when the ringing signal current is more than a predetermined amount during the predetermined polarity of the ringing signal voltage. The output signal indicates that the subscriber terminal has gone off-hook. The telephone system may be a large electronic switching system, a small PBX, or something in between.

In more detail, the telephone system 1 has therein a common control computer (CC, not shown) which controls the operation of the system 1. In particular, the CC can command the subscriber loop interface circuit (SLIC) 2 to apply a ringing signal from ringing generator 3 to a telephone line or loop 7 for application to the subscriber terminal 4. Switches 5 (part of what is commonly known as a switch set 8, such as AT&T's LH1208AAJ/AAR switch set), controlled by the CC, couples the generator 3 to the loop 7. Typically, CC controls the switches 5 to apply a ringing signal, as discussed above, and is to be alerted when the subscriber has put the terminal 4 in an off-hook condition (by removing handset 15 from cradle 16), thus "answering the call" and removing further need for a ringing signal.

Detecting when the terminal 4 goes off-hook and alerting the CC is a crucial part of the proper operation of the telephone system 1. It has been discovered that at typical ringing signal frequencies (e.g., 20 Hz), the terminal 4 "looks" substantially capacitive on-hook, while the terminal 4 "looks" substantially resistive off-hook. Thus, the ringing signal current polarity and magnitude, when measured during a corresponding polarity in the ringing signal voltage, is less when the terminal 4 is on-hook than when it is off-hook. The exemplary embodiment of the invention utilizes a technique that determines the on-hook and off-hook status of the terminal 4 by detecting when ringing signal current is negative and exceeds a predetermined amount and the ringing signal voltage is negative.

In this particular embodiment, the ringing signal current is measured by resistor 17 disposed in series with the ringing signal generator 3. Circuit means 10, coupled to the ringing signal generator 3 and the resistor 17, measures the ringing signal current (represented by the voltage across resistor 17) when the ringing signal voltage is negative. Circuit 10 converts the voltage across resistor 17 into a current which, in turn, creates a voltage across load resistor 20. The gain of the circuit 10, as determined by the values of resistors 18, 20 and transistor 19, in combination with the threshold voltage of buffer 22, substantially determine the amount of ringing signal current necessary to switch buffer 22. Diode 25 assures that the circuit 10 operates only when the ringing signal voltage is negative by blocking current from transistor 19 from flowing into the load resistor 20 if the ringing signal voltage is positive. Thus, the circuit 10 will detect on off-hook condition when the ringing signal current polarity and the polarity of the ringing signal voltage are alike. Diodes 24 and 26 protect transistor 19 and buffer 22 from reverse voltages.

The following exemplary circuit values were used for the circuit 10:
- resistor 17: 300 ohms
- resistor 18: 20K ohms
- resistor 20: 200K ohms
- resistor 21: 10K ohms
- buffer 22: threshold voltage 2.5 volts

Using a 48 volt talking battery 30 and a 20 Hz, 88 volt (rms) ringing signal generator 3, the circuit 10 will indicate to the CC that the terminal 4 is off-hook when the total loop resistance (the resistance of the terminal 4 and the resistance of the loop 7 together in series) is about 5 K ohms or less. Reliability in detecting an off-hook condition during ringing has been found to be better with the disclosed technique than prior art duty cycle measuring techniques.

The above-described circuit may be modified to be sensitive to the magnitude of the ringing signal voltage as well as the polarity, i.e., off-hook is detected when the ringing signal current exceeds a predetermined amount and the ringing signal voltage also exceeds a predetermined amount. Further, the circuit may be modified to be operable on either polarity of ringing signal voltage and current as long as the polarities of each are alike. Still further, it is envisioned that the function of circuit 10 may be implemented in a digital signal processor (DSP).

## Claims

1. In a telephone system (1), a method of detecting when a subscriber terminal (4) goes off-hook while a ringing signal is being applied thereto,
CHARACTERIZED BY THE STEPS OF:
measuring the ringing signal current;
generating an output signal when the ringing signal current exceeds a predetermined amount and the ringing signal voltage has a predetermined polarity;
wherein the presence of the output signal indicates that the subscriber terminal is off-hook.

2. The method of detecting as recited in claim 1, wherein the step of measuring the current is characterized by the steps of:
passing the ringing signal through a resistor (17) to generate a voltage thereacross corresponding to the ringing signal current polarity;
converting the voltage across the resistor into a current when the ringing signal voltage has a predetermined polarity;
wherein the predetermined polarity of the ringing signal voltage and the polarity of the ringing signal current are alike.

3. The method of detecting as recited in claim 2, wherein the ringing signal is produced by a ringing voltage generator (3).

4. The method of detecting as recited in claim 3, wherein the subscriber terminal is a telephone set.

5. In a subscriber line interface circuit (2), an apparatus for detecting when a subscriber terminal (4) goes off-hook when a ringing signal generator (3) is coupled to the terminal, CHARACTERIZED BY:
means (12) for measuring the ringing signal current;
means (10), responsive to the means for measuring, for generating an output signal when the ringing signal current is greater than a predetermined amount and the ringing signal voltage has a predetermined polarity;
wherein the presence of the output signal indicates that the subscriber terminal is off-hook.

6. The apparatus recited in claim 5, wherein the means for measuring is further characterize by:
a resistor, disposed in series with the ringing generator, for producing a voltage thereacross.

7. The apparatus recited in claim 6, wherein the means for generating is further characterized by:
a transistor (19), responsive to the voltage across the resistor for converting the voltage across the resistor into a current;
a load resistor (20), coupling to the transistor, for converting the current from the transistor into a voltage;
a buffer (22), responsive to the voltage across the load resistor, having an output and a predetermined threshold voltage; and
gating means (25), responsive to the ringing signal voltage, for selectively blocking the current from the transistor.

8. The apparatus recited in claim 6, wherein the gating means is a diode.
